# EUROPÄISCHE PATENTSCHRIFT

(11) **EP 0 772 748 B1**
(45) Veröffentlichungstag und Bekanntmachung des Hinweises auf die Patenterteilung: **27.01.1999**
(21) Anmeldenummer: 95926865.7
(22) Anmeldetag: 12.07.1995
(51) Int. Cl.: F16D 51/16, B60T 8/00, B60T 1/06, G01P 1/02

(54) **TROMMELBREMSE MIT UNTERTEILTEM BREMSTRÄGER**
DRUM BRAKE WITH DIVIDED BRAKE ANCHOR PLATE
FREIN A TAMBOUR A PLATEAU DE FREIN DIVISE

(30) Priorität: 28.07.1994 DE 9412234 U
(43) Veröffentlichungstag der Anmeldung: 14.05.1997
(73) Patentinhaber: LUCAS INDUSTRIES PUBLIC LIMITED COMPANY, Solihull, West Midlands B91 3TX (GB)
(72) Erfinder: LÜDTKE, Peter, D-53424 Remagen (DE); BIEBRICHER, Frank, D-65626 Fachingen (DE); LANGERT, Albert, D-56567 Neuwied (DE); OP DEN CAMP, Eckhart, D-56073 Koblenz (DE)
(74) Vertreter: Goetz, Rupert, Dipl.-Ing.
(86) Internationale Anmeldenummer: EP9502731
(87) Internationale Veröffentlichungsnummer: WO9603594

(56) Entgegenhaltungen:
- EP-A- 0 485 093
- DE-A- 3 703 395
- DE-A- 3 705 008
- US-A- 4 061 429

## Beschreibung

Die Erfindung betrifft eine Trommelbremse nach dem Oberbegriff des Anspruchs 1. Eine solche Trommelbremse ist aus DE-A-37 05 008 bekannt.

Mit einem Antiblockiersystem (ABS) und ggf. zusätzlich mit Antriebsschlupfregelung (ASR) ausgerüstete Fahrzeuge haben Drehzahlsensoren, die an je einer Trommelbremse angeordnet sein können. In solchen Fällen ist es üblich, eine Rückenplatte mit einer Halterung für einen solchen Sensor auszustatten. Als Halterung ist gemäß DE-A-37 05 008 ein Verankerungselement vorgesehen, das an der Rückenplatte befestigt ist, ein Paar Widerlager für je eines von zwei einander gegenüberliegenden Enden zweier Bremsbacken und in der Mitte zwischen diesen ein Durchgangsloch aufweist, in das der Drehzahlsensor eingepreßt ist.

Bei solchen bekannten Anordnungen ergeben sich Probleme daraus, daß die üblicherweise aus Stahlblech gepreßte Rückenplatte beim Fahren auf unebener Fahrbahn in Schwingungen geraten kann. Außerdem kann die Rückenplatte innere Spannungen aufweisen, die bei einer durch kräftiges oder langanhaltendes Bremsen hervorgerufenen Erhitzung freiwerden und bleibende Verformungen hervorrufen. Solche Schwingungen und/oder bleibende Verformungen sind zwar für die eigentliche Funktion der Rückenplatte bedeutungslos, können aber dazu führen, daß die an ihr befestigte Halterung für den Drehzahlsensor periodisch oder ständig ihre Lage verändert. Dies hat die Folge, daß ein vorbestimmter Luftspalt zwischen dem Drehzahlsensor und einer von ihm abzutastenden Markierung nicht genau eingehalten wird, woraus sich Probleme bei der Erfassung von Geschwindigkeitsänderungen des zugehörigen Rades ergeben können.

Bei einer aus US-A-4 061 429 bekannten Trommelbremse besteht eine klare Aufgabenteilung zwischen einem Stützkörper und einer Rückenplatte, die gemeinsam einen Bremssträger bilden. Der Stützkörper hat die Aufgabe, die beim Bremsen auftretenden Umfangskräfte von den Bremsbacken auf das zugehörige Achsgehäuse zu übertragen und besteht deshalb aus dickem Blech. Dennoch ist der Stützkörper nicht besonders schwer, da er sich, abgesehen von seinem zentralen Ring, nur über einen kleinen Sektor der Trommelbremse erstreckt. Die Rückenplatte hat hingegen die Aufgabe, die Bremsbacken nur in axialer Richtung abzustützen; im übrigen wirkt die Rückenplatte als Schmutzschild, um den Innenraum der Trommelbremse vor Verschmutzung zu schützen. Dementsprechend erstreckt sich die Rückenplatte über den gesamten Umfang der Trommelbremse; dennoch läßt sich auch bei der Rückenplatte Gewicht sparen, da sie nur geringfügig belastet wird und deshalb aus verhältnismäßig dünnem Blech besteht. Das Gesamtgewicht von Stützkörper und Rückenplatte dieser Trommelbremse ist deshalb geringer als das Gewicht der bei der eingangs beschriebenen Trommelbremse (DE-A-37 05 008) einstückigen Rückenplatte, die beiden genannten Zwecken dient und deshalb ein Preßteil aus dickem Stahlblech ist.

Der Erfindung liegt die Aufgabe zugrunde, eine Trommelbremse der eingangs beschriebenen Gattung derart weiterzubilden, daß sie für eine sich auch bei starker Erhitzung nicht wesentlich verändernde Anordnung eines Raddrehzahl-Sensors geeignet ist.

Die Aufgabe ist erfindungsgemäß mit den kennzeichnenden Merkmalen des Anspruchs 1 gelöst.

Der erfindungsgemäße Stützkörper ändert seine Form auch bei starker Erhitzung nur unwesentlich, weil er sich im Gegensatz zur zugehörigen Rückenplatte und auch im Gegensatz zu bekannten Rückenplatten nur über einen kleinen Teil der von der Trommelbremse eingenommenen Fläche erstreckt, so daß der Stützkörper nicht zum Aufbau innerer Spannungen neigt, die bei Erhitzung freiwerden könnten. Die Rückenplatte kann sich hingegen erheblich verformen, ohne daß dies einen Einfluß auf die Lage der erfindungsgemäß am Stützkörper angeordneten Halterung für den Raddrehzahl-Sensor hätte.

Vorteilhafte Weiterbildungen der Erfindung ergeben sich aus den Unteransprüchen.

Ausführungsbeispiele der Erfindung werden im folgenden anhand schematischer Zeichnungen mit weiteren Einzelheiten erläutert. Es zeigen:
- Fig.1: eine Seitenansicht einer ersten erfindungsgemäßen Trommelbremse,
- Fig.2: den Schnitt in der axialen Ebene II-II in Fig.1,
- Fig.3: den Schnitt in der achsparallelen Ebene III-III in Fig.1,
- Fig.4: den Schnitt in der ebenfalls achsparallelen Ebene IV-IV in Fig.1,
- Fig.5: eine der Fig.1 entsprechende Seitenansicht einer zweiten erfindungsgemäßen Trommelbremse,
- Fig.6: den Schnitt in der axialen Ebene VI-VI in Fig.5 und
- Fig.7: den Schnitt in der achsparallelen Ebene VII-VII in Fig.5.

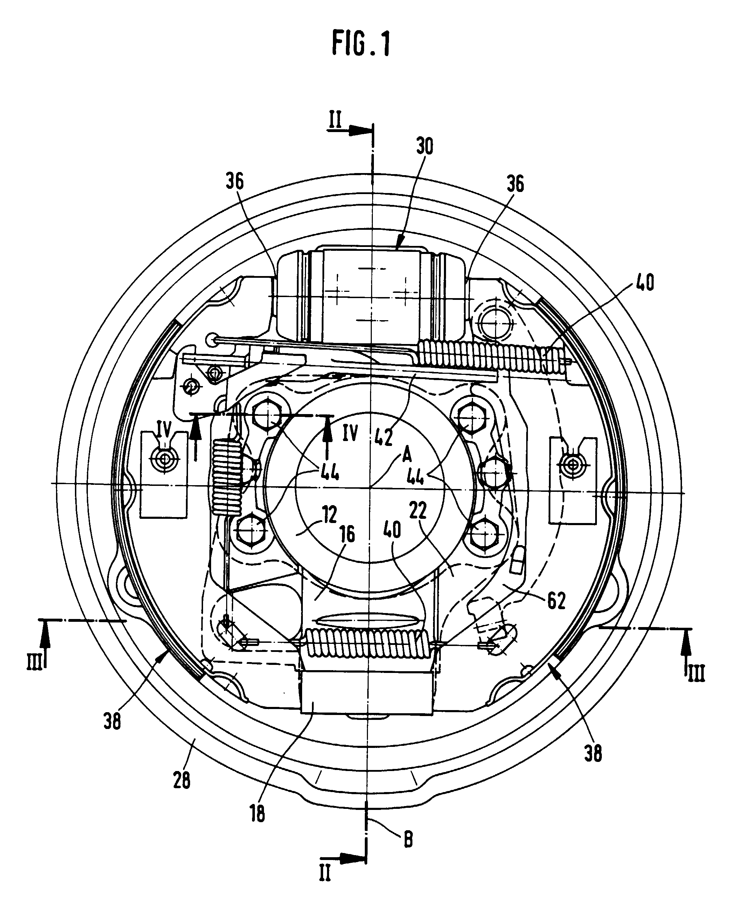

Beide dargestellten Trommelbremsen haben als tragenden Bestandteil je einen Stützkörper 10, der in teigigem Zustand unter hohem Druck aus einer hochfesten Aluminiumlegierung gegossen ist. Der Stützkörper 10 hat einen zentralen Ring 12, dessen radial innerer Rand durch Drehen feinbearbeitet ist. Im Ring 12 sind vier in Winkelabständen gegeneinander versetzte Löcher 14 ausgebildet. Der Stützkörper 10 weist ferner einen Widerlagerträger 16 auf, der vom Ring 12 radial nach außen und in Bezug auf das Fahrzeug schräg nach innen wegragt und an seinem Ende ein Widerlager 18 trägt, das mit ihm einstückig ausgebildet oder in herkömmlicher Weise von einer aufgenieteten Stahlplatte od.dgl. gebildet sein kann. Bei dem in Fig.1 bis 4 dargestellten Ausführungsbeispiel ist der Stützkörper 10 insgesamt symmetrisch in Bezug auf eine die Achse A der kreisförmigen Innenkontur des Rings 12 enthaltende Mittelebene B.

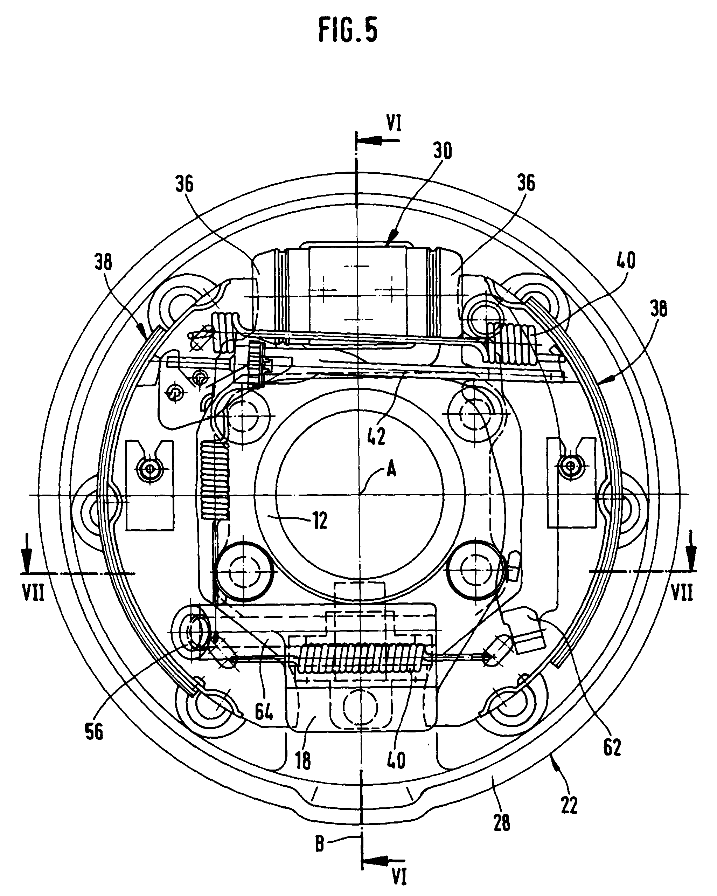

Radial zur Achse A (Fig.1 bis 4) oder schräg dazu (Fig.5 bis 7) und ebenfalls in der Mittelebene B liegend, ist eine Bohrung angeordnet, die am Ansatz des Widerlagerträgers 16 in den Ring 12 eingearbeitet ist und als Halterung 20 für einen Raddrehzahl-Sensor dient. Die Halterung 20 ist wegen ihrer engen Nachbarschaft zum in axialer und radialer Richtung genau positionierten radial inneren Rand des Rings 12 wenig von Wärmedehnungen betroffen; im übrigen ist der frei auskragende Widerlagerträger 16 dem Fahrtwind ausgesetzt und deshalb verhältnismäßig gut gekühlt. Selbst die größten im Betrieb auftretenden mechanischen Belastungen können bei der dargestellten Konstruktion die Lage der Halterung 20 nicht in einem Maß ändern, das einen negativen Einfluß auf die Signalabgabe des Sensors haben könnte.

Zu beiden dargestellten Trommelbremsen gehört ferner je eine im wesentlichen ringförmige Rückenplatte 22, die in den dargestellten Beispielen aus dünnem Stahl- oder Aluminiumblech gestanzt ist, aber auch ein Formteil aus Kunststoff sein kann. Die Rückenplatte 22 hat vier Löcher 24, die mit je einem der Löcher 14 des Stützkörpers 10 fluchten, sowie Erhebungen 26 und einen umlaufenden erhabenen Rand 28. An der Rückenplatte 22 ist, dem Widerlager 18 diametral gegenüber, ein Bremszylinder 30 mittels Schrauben 32 befestigt.

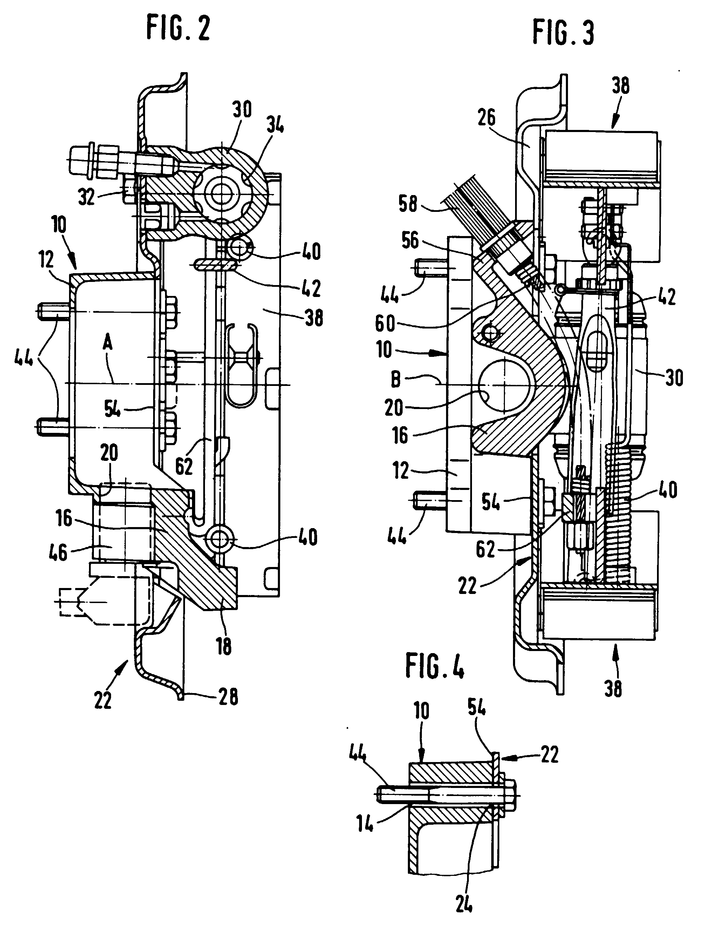

Der Bremszylinder 30 hat eine durchgehende Zylinderbohrung 34, in der zwei Kolben 36 geführt sind. An den beiden Kolben 36 stützt sich je eine Bremsbacke 38 mit ihrem in Fig.1 und 2 oberen Ende ab, während die unteren Enden beider Bremsbacken 38 am Widerlager 18 abgestützt sind. Wie üblich, sind die beiden Bremsbacken 38 durch Rückstellfedern 40 miteinander verbunden, und in geringem Abstand parallel zum Bremszylinder 30 ist zwischen den beiden Bremsbacken 38 eine Nachstellstrebe 42 angeordnet.

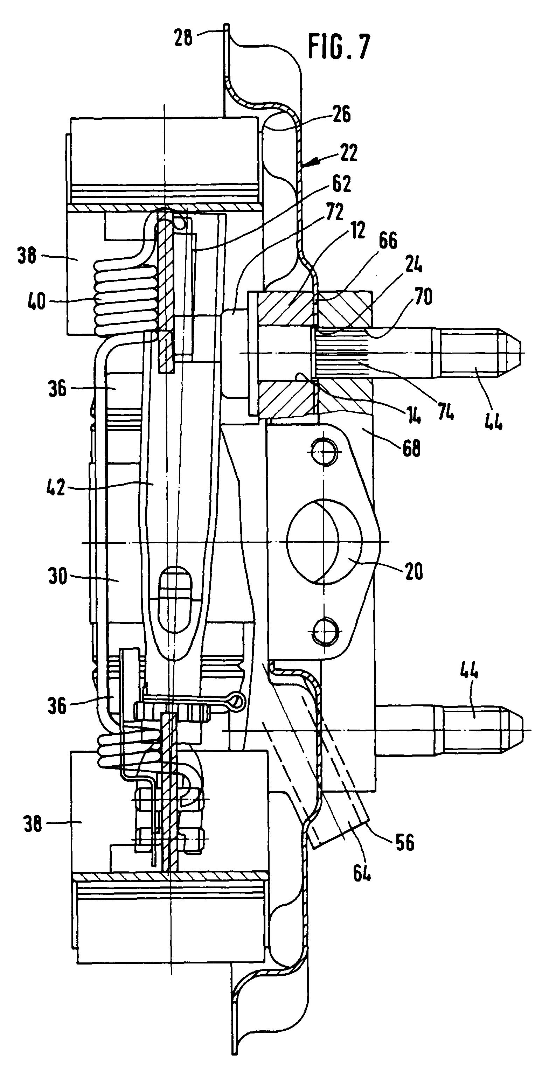

Durch die miteinander fluchtenden Löcher 14 und 24 erstreckt sich, wie besonders aus Fig.4 und 7 ersichtlich ist, je eine Schraube 44 zur Befestigung an einem nicht dargestellten Achsgehäuse, an dem der Ring 12 mit seinem genau bearbeiteten, kreisförmigen inneren Rand zentriert ist. Die Rückenplatte 22 bedarf einer genauen Zentrierung nicht; sie ist deshalb durch die Schrauben 44 nur grob zentriert.

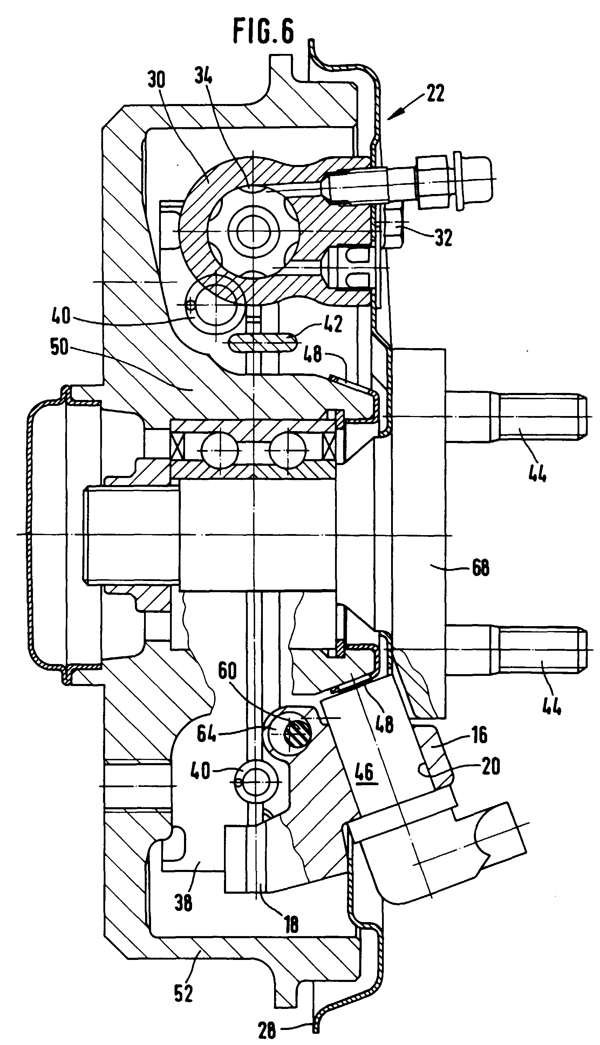

In der Halterung 20 ist gemäß Fig.2 und 6 ein Raddrehzahl-Sensor 46 in genau bestimmter Stellung befestigt. Diesem Sensor 46 ist eine Markierung 48 zugeordnet, die rings um einen in den Ring 12 mit radialem Abstand eingreifenden Abschnitt einer nur in Fig.6 dargestellten Radnabe 50 angeordnet ist. Die Radnabe 50 ist einstückig mit einer Bremstrommel 52 ausgebildet. Das genannte, nicht dargestellte Achsgehäuse kann in üblicher Weise an einem Längslenker eines Fahrzeugs angeordnet sein.

Beiden dargestellten Trommelbremsen ist ferner gemeinsam, daß die Rückenplatte 22 in dem Bereich, in dem sie am Stützkörper 10 befestigt ist, von diesem durch eine Zwischenlage 54 aus schwingungsdämpfendem Material getrennt ist. Die Zwischenlage 54 kann beispielsweise eine Beschichtung der einander benachbarten Flächen der Rückenplatte 22 und/oder des Stützkörpers 10 aus einem Elastomermaterial sein, das unter der Marke Wolverine bekannt ist. Die Zwischenlage 54 verhindert weitgehend, daß in der dünnen Rückenplatte 22 induzierte Schwingungen auf den Stützkörper 10, und somit auf die Halterung 20 für den Raddrehzahl-Sensor 46 übertragen werden. Eine Zwischenlage 54 in Form einer Beschichtung aus Wolverine hat sich gegenüber Schwingungen im Bereich von 3000 Hz als besonders wirksam erwiesen.

Zur mechanischen Betätigung von Trommelbremsen, insbesondere für Feststellbremsungen, ist üblicherweise ein Bowdenzug vorgesehen mit einem Bremsseil, das an einem Hebel angreift, der an einer der Brembacken gelagert ist. Das Bremsseil erstreckt sich üblicherweise durch ein Loch in der Rückenplatte, und der Mantel ist in der Umgebung des Lochs abgestützt, um Reaktionskräfte auf die Rückenplatte zu übertragen. Wegen dieser Reaktionskräfte muß die Rückenplatte üblicherweise einigermaßen kräftig und somit schwer gestaltet sein, auch wenn die beim Bremsen auftretenden, in Umfangsrichtung der Bremsbacken wirkenden Reaktionskräfte vom Stützkörper aufgenommen werden.

Im Gegensatz dazu wird bei beiden dargestellten Ausführungsbeispielen der Erfindung die Rückenplatte 22 auch von den Reaktionskräften der Bremsbetätigungskräfte entlastet. Dies geschieht dadurch, daß der Stützkörper 10 eine Abstützung 56 für den zu einem üblichen Bowdenzug gehörigen Mantel 58 aufweist. Das zugehörige Bremsseil 60 ist in üblicher Weise nahe dem Ende eines Bremshebels 62 angehängt, der an einer der Bremsbacken 38 schwenkbar gelagert ist und mit der Nachstellstrebe 42 zusammenwirkt. Dieses Konstruktionsprinzip ist gemäß Fig.5 bis 7 dadurch weitergebildet, daß die Abstützung 56 am Anfang eines Kanals 64 ausgebildet ist, der sich gerade oder bogenförmig durch den Stützkörper 10 hindurcherstreckt und in seinem Endbereich derart auf das Ende des Bremshebels 62 ausgerichtet ist, daß das Bremsseil 60 bei der Montage von selbst am Bremshebel 62 einrastet.

Das Ausführungsbeispiel gemäß Fig.5 bis 7 hat gegenüber dem in Fig.1 bis 4 dargestellten die weitere Besonderheit, daß der radial innere Rand der Rückenplatte 22, in dem die Löcher 24 ausgebildet sind, zwischen dem Stützkörper 10 und einer ringförmigen Klemmplatte 68 eingespannt ist. Zu diesem Zweck erstrecken sich die Schrauben 44 wie bei dem in Fig.1 bis 4 dargestellten Ausführungsbeispiel durch je ein Loch 14 im Stützkörper 10 sowie ein Loch 24 in der Rückenplatte 22 und ferner durch je ein Loch 70 in der Klemmplatte 68. Die Schrauben 44 haben in einem Abstand von ihrem Kopf 72 eine Rändelung 74, mit der sie in die Wand des zugehörigen Lochs 70 derart eindringen, daß die Klemmplatte 68 mit der Rückenplatte 22 und dem Stützkörper 10 schon unverlierbar zusammengehalten wird, noch ehe die Schrauben 44, wie oben erwähnt, in ein nicht dargestelltes Achsgehäuse od. dgl. eines Kraftfahrzeugs eingeschraubt werden.

## Patentansprüche

1. Trommelbremse mit
- einer Rückenplatte (22), an der Bremsbacken (38) in axialer Richtung abstützbar sind,
- einem Widerlagerträger (16), an dem die Bremsbacken (38) in Umfangsrichtung abstützbar sind, und
- einer Halterung (20) für einen Drehzahlsensor (46),
gekennzeichnet durch einen Stützkörper (10), der
- einen von der Rückenplatte (22) getrennten Teil eines Bremsträgers bildet,
- einen zentralen Ring (12) zur Zentrierung und Befestigung an einem Achsgehäuse eines Fahrzeugs aufweist,
- sich im Gegensatz zur Rückenplatte (22) nur über einen kleinen Teil der von der Trommelbremse eingenommenen Fläche erstreckt,
- den Widerlagerträger (16) aufweist und ferner
- die Halterung (20) für den Drehzahlsensor (46) aufweist.

2. Trommelbremse nach Anspruch 1,
dadurch **gekennzeichnet**, daß der Widerlagerträger (16) und die Halterung (20) eine gemeinsame axiale Mittelebene (B) haben.

3. Trommelbremse nach Anspruch 2,
dadurch **gekennzeichnet,** daß der Stützkörper (10) insgesamt symmetrisch in Bezug auf die Mittelebene (B) gestaltet ist.

4. Trommelbremse nach Anspruch 2 oder 3,
dadurch **gekennzeichnet**, daß die Halterung (20) radial angeordnet ist.

5. Trommelbremse nach einem der Ansprüche 1 bis 4,
dadurch gekennzeichnet, daß am Widerlagerträger (16) ein Widerlager (18) für die Bremsbacken (38) einstückig ausgebildet ist.

6. Trommelbremse nach einem der Ansprüche 1 bis 5,
dadurch **gekennzeichnet**, daß der Stützkörper (10) in einem Druckgußverfahren aus Aluminium hergestellt ist.

7. Trommelbremse nach einem der Ansprüche 1 bis 6,
dadurch **gekennzeichnet**, daß zwischen dem Stützkörper (10) und der Rückenplatte (22) eine Schwingungsdämpfende Zwischenlage (54), insbesondere aus Kunststoff angeordnet ist.

8. Trommelbremse nach einem der Ansprüche 1 bis 7,
dadurch **gekennzeichnet**, daß der Stützkörper (10) auch eine Abstützung (56) für einen Mantel (58) eines Bremsseils (60) zum mechanischen Betätigen der Bremse aufweist.

9. Trommelbremse nach Anspruch 8,
dadurch **gekennzeichnet,** daß sich an die Abstützung (56) ein Kanal (64) anschließt, in dem das Bremsseil (60) durch den Stützkörper (10) hindurch zu einem Bremshebel (62) geführt wird.

10. Trommelbremse nach einem der Ansprüche 1 bis 9,
dadurch **gekennzeichnet**, daß die Rückenplatte (22) einen radial inneren Rand (66) aufweist, der zwischen dem Stützkörper (10) und einer Klemmplatte (68) festgeklemmt ist.

## Claims

1. A drum brake comprising
- a back plate (22) adapted to support brake shoes (38) in axial direction,
- an abutment carrier (16) adapted to support the brake shoes (38) in circumferential direction, and
- mounting means (20) for a speed sensor (46),
characterized by a supporting body (10) which
- forms a part of a brake support separate from the back plate (22),
- includes a central ring (12) for centering and securing to an axle housing of a vehicle,
- in contrast to the back plate (22), extends only over a small part of the area covered by the drum brake,
- includes the abutment carrier (16), and further
- includes the mounting means (20) for the speed sensor (46).

2. The drum brake according to claim 1,
characterized in that the abutment carrier (16) and the mounting means (20) have a common axial centre plane (B).

3. The drum brake according to claim 2,
characterized in that the supporting body (10) as a whole is designed to be symmetrical relative to the centre plane (B).

4. The drum brake according to claim 2 or 3,
characterized in that the mounting means (20) is arranged radially.

5. The drum brake according to one of claims 1 to 4,
characterized in that an abutment (18) for the brake shoes (38) is integrally formed at the abutment carrier (16).

6. The drum brake according to one of claims 1 to 5,
characterized in that the supporting body (10) is manufactured from aluminium by a pressure diecasting method.

7. The drum brake according to one of claims 1 to 6,
characterized in that a vibration damping intermediate layer (54), in particular of plastic material, is arranged between the supporting body (10) and the back plate (22).

8. The drum brake according to one of claims 1 to 7,
characterized in that the supporting body (10) also comprises a rest (56) for a jacket (58) of a brake cable (60) for actuating the brake mechanically.

9. The drum brake according to claim 8,
characterized in that a channel (64) is connected to the rest (56) in which channel the brake cable (60) is routed through the supporting body (10) to a brake lever (62).

10. The drum brake according to one of claims 1 to 9,
characterized in that the back plate (22) has a radial inner rim (66) which is clamped between the supporting body (10) and a clamping plate (68).

## Revendications

1. Frein à tambour comprenant
- un plateau arrière (22) sur lequel peuvent s'appuyer en direction axiale des segments de frein (38),
- un support de butée (16) sur lequel les segments de frein (38) peuvent s'appuyer dans la direction circonférentielle, et
- une fixation (20) pour un capteur de vitesse de rotation (46),
caractérisé par un corps d'appui (10) qui
- forme une partie séparée du plateau arrière (22) d'un support de frein,
- présente une couronne centrale (12) pour le centrage et la fixation à un carter d'essieu d'un véhicule,
- ne s'étend au contraire du plateau arrière (22) que sur une petite partie de la surface occupée par le frein à tambour,
- présente le support de butée (16) et
- présente de plus la fixation (20) pour le capteur de vitesse de rotation (46).

2. Frein à tambour selon la revendication 1,
caractérisé en ce que le support de butée (16) et la fixation (20) possèdent un plan médian axial commun (B).

3. Frein à tambour selon la revendication 2,
caractérisé en ce que le corps d'appui (10) est dans son ensemble symétrique par rapport au plan médian (B).

4. Frein à tambour selon la revendication 2 ou 3,
caractérisé en ce que la fixation (20) est disposée radialement.

5. Frein à tambour selon l'une quelconque des revendications 1 à 4,
caractérisé en ce qu'une butée (18) pour les segments de frein (38) est formée d'une seule pièce sur le support de butée (16).

6. Frein à tambour selon l'une quelconque des revendications 1 à 5,
caractérisé en ce que le corps d'appui (10) est fabriqué en aluminium selon un procédé de moulage sous pression.

7. Frein à tambour selon l'une quelconque des revendications 1 à 6,
caractérisé en ce qu'une couche intermédiaire amortissant les vibrations (54), en particulier en matière synthétique, est disposée entre le corps d'appui (10) et le plateau arrière (22).

8. Frein à tambour selon l'une quelconque des revendications 1 à 7,
caractérisé en ce que le corps d'appui (10) présente aussi un appui (56) pour une gaine (58) d'un câble de frein (60) pour l'actionnement mécanique du frein.

9. Frein à tambour selon la revendication 8,
caractérisé en ce qu'un conduit (64), dans lequel le câble de frein (60) est guidé à travers le corps d'appui (10) vers un levier de frein (62), se raccorde à l'appui (56).

10. Frein à tambour selon l'une quelconque des revendications 1 à 9,
caractérisé en ce que le plateau arrière (22) présente un bord radialement intérieur (66) qui est fixé par serrage entre le corps d'appui (10) et une plaque de serrage (68).
